# EUROPEAN PATENT SPECIFICATION

(11) **EP 4 131 514 B1**
(45) Date of publication and mention of the grant of the patent: **03.09.2025**
(21) Application number: 21811761.2
(22) Date of filing: 11.05.2021
(51) Int. Cl.: H01M 4/66, H01M 50/531, H01M 10/0525

(54) **CURRENT COLLECTOR AND APPLICATION THEREOF**
STROMABNEHMER UND DESSEN VERWENDUNG
COLLECTEUR DE COURANT ET SON APPLICATION

(30) Priority: 29.05.2020 CN 202010473157
(43) Date of publication of application: 08.02.2023
(73) Proprietor: Zhuhai CosMX Battery Co., Ltd., Zhuhai, Guangdong 519180 (CN)
(72) Inventor: ZHAO, Wei, Zhuhai, Guangdong 519180 (CN); LI, Suli, Zhuhai, Guangdong 519180 (CN); LI, Junyi, Zhuhai, Guangdong 519180 (CN); XU, Yanming, Zhuhai, Guangdong 519180 (CN)
(74) Representative: Gill Jennings & Every LLP
(86) International application number: PCT/CN2021/092986
(87) International publication number: WO 2021/238642

(56) References cited:
- EP-A1- 3 637 504
- WO-A1-2012/081368
- CN-A- 111 509 233
- CN-A- 112 216 842
- CN-U- 208 433 464
- CN-U- 208 433 464
- CN-U- 208 433 466
- CN-U- 208 433 467
- CN-U- 211 088 397
- KR-A- 20160 129 939

## Description

### TECHNICAL FIELD

The present invention relates to a current collector and an application thereof, and, to the technical field of lithium-ion batteries.

### BACKGROUND

Due to the high energy density and high power density, at present, lithium-ion batteries have become secondary batteries that are used very extensively. A conventional current collector of a lithium-ion battery is made of metal foil material, a positive electrode usually adopts metal aluminum foil and a negative electrode usually adopts metal copper foil; however, once an internal short circuit occurs in the lithium-ion battery which is directly prepared with the metal foil, the current cannot be cut off inside the battery, so that heat is accumulated and then thermal runaway is finally caused. In order to solve this problem, some researchers use a new type of polymer/metal composite current collector, in which a non-conductive polymer film is usually used as substrate and the upper and lower surfaces of the polymer film is coated with a layer of metal material, to replace a conventional metal current collector. For example, the upper and lower surfaces of the PET (polyethylene terephthalate) film are coated with metal aluminum as a positive current collector, and the upper and lower surfaces of the PET (polyethylene terephthalate) film are coated with metal copper as a negative current collector, which have achieved a certain effect of improving the safety performance of the battery.

However, after the above polymer/metal composite current collector is connected to a tab, the contact impedance of the tab connection region is high due to a poor binding force between the tab and the current collector, and in addition, a qualified rate of the tab connected to the composite current collector is also relatively low, which ultimately has a certain impact on the performance of the composite current collector and the lithium ion battery. Therefore, how to improve the contact resistance and the connection qualified rate of the tab connected to the polymer/metal composite current collector has attracted more and more attention.

CN208433464U discloses a battery, a battery cell and a current collector, where the current collector includes a base film, a first metal layer disposed on a first surface of the base film, a second metal layer disposed on a second surface of the base film and a tab connected with the first metal layer and the second metal layer. EP3637504A1 discloses a secondary battery and an electrode plate thereof, where the electrode plate includes a current collector and an active material layer, and current collector comprises an insulating layer and a first conducting layer provided on a surface of the insulating layer. WO2012081368A1 discloses a non-aqueous secondary battery, including: a positive electrode (10) including a positive-electrode current collector (11), which has a multilayer structure whereby a conductive layer (14) is formed on both surfaces of a resin layer (13), and a positive-electrode active material layer (12) that is formed on the positive-electrode current collector; a penetrating member (80) containing a conductive material and penetrating the positive-electrode current collector in the thickness direction; and an electrode tab (41) electrically connected to the positive electrode.

### SUMMARY

The present invention is defined in the appended set of claims. The present invention provides a current collector for solving an existing problem of high contact resistance and low connection qualified rate of the tab on a polymer/metal composite current collector.

A first aspect of the present disclosure, not part of the invention, provides a current collector, which includes M metal layers and N polymer layers. The metal layer and the polymer layer are stacked. Each of L metal layers includes a tab connection region and a non-tab connection region, and a thickness of the tab connection region is greater than that of the non-tab connection region. M ≥ 1, N ≥ 1, L ≥ 1, and M ≥ L.

The present invention provides a current collector having an improved structure compared to the existing composite current collector, including a polymer layer and a metal layer that are stacked. The metal layer is connected with a tab and thus the metal layer connected with the tab is divided into the tab connection region and the non-tab connection region. Those skilled in the art may set the number of polymer layers and metal layers and the connection pattern of the tabs according to the prior art and in combination with the actual preparation requirements, and then perform a thickening treatment to the metal layer in the tab connection region so that, in the final current collector structure, the thickness of a portion of the metal layer corresponding to the tab connection region is greater than that of a portion of the metal layers corresponding to the non-tab connection region. Specifically, in the preparation process of a current collector, those skilled in the art may prepare a current collector according to actual needs and existing process methods. For example, the current collector with a uniform thickness of metal layer may be first prepared according to the prior art, and then the portion of the metal layer corresponding to the tab connection region is subjected to a thickening treatment by conventional evaporation, sputtering or electroplating methods; alternatively, a region with the same area as that of the tab connection region may be reserved firstly in the polymer layer, and then a metal layer with a corresponding thickness is directly disposed on the reserved region. The current collector structure provided by the present application may be obtained by any of the above two methods, and there is no further limitation on the preparation pattern in the invention. The present invention provides a current collector, which effectively improves the welding strength of the tab by performing a thickening treatment on the tab connection region for connecting the tab in the metal layer, so as to improve the binding force between the tab and the current collector, reduce the contact impedance of the tab connection region, and increase the connection qualified rate between the tab and the metal layer,.

The present invention is applicable to a variety of current collector structures, which are described in detail as follows.

In one specific embodiment, not part of the invention, the current collector includes the polymer layer and the metal layer disposed on an upper surface or a lower surface of the polymer layer.

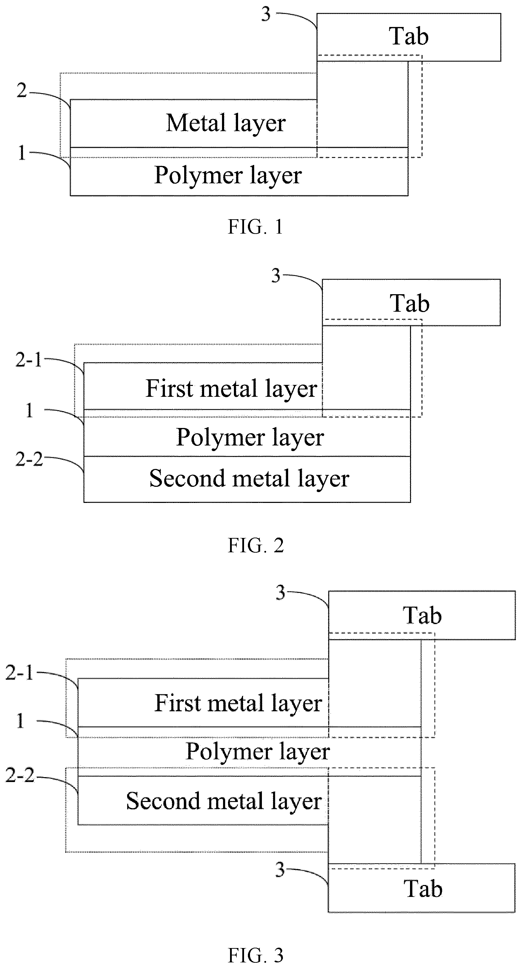

FIG 1 is a schematic structural diagram of a current collector according to an embodiment not part of the present invention. As shown in FIG 1, the current collector provided by this embodiment includes one polymer layer 1 and one metal layer 2. The metal layer 2 is disposed on an upper surface of the polymer layer 1. An upper surface of the metal layer 2 away from the polymer layer 1 includes a tab connection region (a portion framed by the short dashed line "- - - - - - - " in FIG 1, the same below) and a non-tab connection region (a portion framed by the circular dot "........................." in FIG 1, the same below), and a tab 3 is connected with the tab connection region. That is, N=M=L=1.

In another specific embodiment, not part of the invention, the current collector includes at least one unit which includes the polymer layer, a first metal layer disposed on the upper surface of the polymer layer and a second metal layer disposed on a lower surface of the polymer layer, and the first metal layer and/or the second metal layer in at least one unit each include a tab connection region and a non-tab connection region.

FIG 2 is a schematic structural diagram of a current collector according to another embodiment not part of the present invention. As shown in FIG 2, the current collector provided by this embodiment includes one polymer layer 1 and two metal layers. The two metal layers are respectively a first metal layer 2-1 disposed on the upper surface of the polymer layer 1 and a second metal layer 2-2 disposed on the lower surface of the polymer layer 1. The upper surface of the first metal layer 2-1 away from the polymer layer 1 includes a tab connection region and a non-tab connection region, and the tab 3 is connected to the tab connection region. That is, N=L=1 and M=2.

FIG 3 is a schematic structural diagram of a current collector according to yet another embodiment not part of the present invention. As shown in FIG 3, the current collector provided by this embodiment includes one polymer layer 1 and two metal layers. The metal layers are respectively a first metal layer 2-1 disposed on the upper surface of the polymer layer 1 and a second metal layer 2-2 disposed on the lower surface of the polymer layer 1. Each of the upper surface of the first metal layer 2-1 away from the polymer layer 1 and the lower surface of the second metal layer 2-2 away from the polymer layer 1 includes a tab connection region and a non-tab connection region, and the tabs 3 are respectively connected to the tab connection region of the first metal layer 2-1 and the tab connection region of the second metal layer 2-2. That is, N=1 and M=L=2.

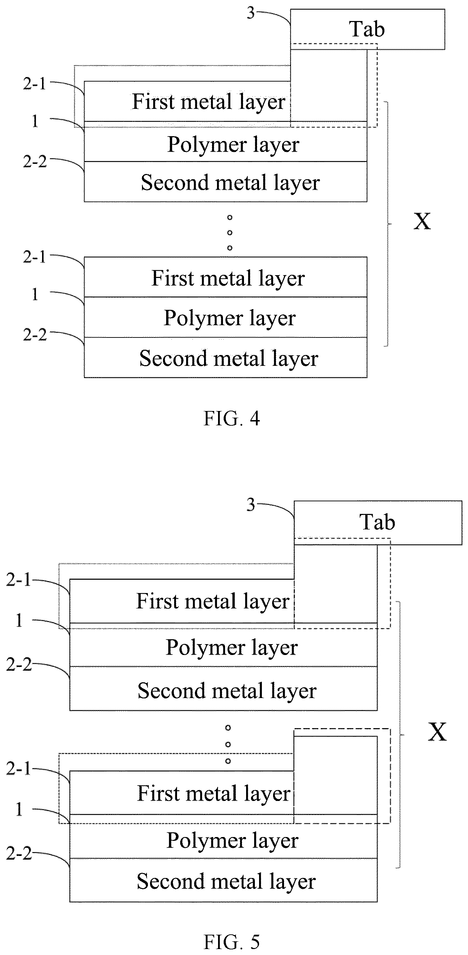

The current collector structure provided by the present invention is a current collector structure with multiple units. FIG 4 is a schematic structural diagram of a current collector according to yet another embodiment of the present invention. As shown in FIG 4, the current collector provided by this embodiment includes X units, where X≥2 and one polymer layer 1 and two metal layers are included in each unit. The metal layers are respectively a first metal layer 2-1 disposed on the upper surface of the polymer layer 1 and a second metal layer 2-2 disposed on the lower surface of the polymer layer 1, where for a first unit, the upper surface of a first metal layer 2-1 includes a tab connection region and a non-tab connection region and the tab 3 is connected with the tab connection region. That is, M≥2, N≥2, and L=1.

It's understood that FIG 4 only shows a first unit and a X-th unit in the current collector structure and omits repeating units therein (that is, each of the repeating units includes the polymer layer 1, the first metal layer 2-1, and the second metal layer 2-2); an active material layer is coated on the surface of the first metal layer and the surface of the second metal layer which respectively are away from the polymer layer in each unit. If the metal layer includes a tab connection region and a non-tab connection region, the active material layer should be coated on the non-tab connection region, which may be set by those skilled in the art according to the prior art and is not described here by the present invention.

Those skilled in the art may set the number and connection position of the tab according the actual requirements, and then perform a thickening treatment on the tab connection region for connecting the tab that is located in the metal layer, which is not specified in detail by the present invention.

When the current collector includes two or more units, the applicant further finds that the problems of low connection qualified rate and high contact impedance also exist at the connections between the units, and similarly to the connection of the tab, the method of thickening the metal layer of the tab connection region is also applicable to the connection of the metal layers between the units. Those skilled in the art can perform a thickening treatment on a metal layer connection region which is located in a certain metal layer and configured for connecting with another metal layer according to actual requirements, that is, the certain metal layer includes a metal layer connection region and a non-metal layer connection region and the metal layer connection region is configured for connecting with a metal layer in another unit, thereby obtaining a current collector structure with multiple units. And the thickness of a portion of the metal layer corresponding to the metal layer connection region is greater than that of a portion of the metal layer corresponding to the non-metal layer connection region. In addition, it should be noted that since the connection of the metal layers between units involves the metal layer in the upper unit and the metal layer in the lower unit, both of the two metal layers may be thickened or only one of the two metal layers may be thickened in the actual preparation process, and the number of the thickened metal layers is not specifically limited by the present invention.

In one specific embodiment, the current collector includes X units, where the first metal layer and/or the second metal layer in Z units include the tab connection region and the non-tab connection region, and the first metal layer and/or the second metal layer of at least one unit in the remaining (X-Z) units include a metal layer connection region and a non-metal layer connection region, where the thickness of the metal layer connection region is greater than that of the non-metal layer connection region, X≥2, Z≥1 and X-Z≥0.

FIG 5 is a schematic structural diagram of a current collector according to yet another embodiment of the present invention. As shown in FIG 5, the current collector provided by this embodiment includes X units, where X≥2 and each unit includes one polymer layer 1 and two metal layers. The metal layers are respectively a first metal layer 2-1 disposed on the upper surface of the polymer layer 1 and a second metal layer 2-2 disposed on the lower surface of the polymer layer 1, where the upper surface of a first metal layer 2-1 away from the polymer layer 1 in a first unit includes a tab connection region and a non-tab connection region and the tab 3 is connected with the tab connection region. The surface of the first metal layer 2-1 and/or the surface of the second metal layer 2-2 which are away from the polymer layer in at least one unit from a second unit to a X-th unit include a metal layer connection region and a non-metal layer connection region, where FIG 5 only shows the metal layer connection region (the part framed by the long dashed line "- - - - -" in FIG 5, the same below) and the non-metal layer connection region (the part framed by the square dot"____________." in FIG 5, the same below) of the first metal layer 2-1 in the unit X. That is, Z=1.

In another specific embodiment, the current collector includes X units. One of the first metal layer and the second metal layer in at least one unit of Z units includes the tab connection region and the non-tab connection region, and the other of the first metal layer and the second metal layer includes a metal layer connection region and a non-metal layer connection region, where the thickness of the metal layer connection region is greater than that of the non-metal layer connection region, X≥2, Z≥1 and X-Z≥0..

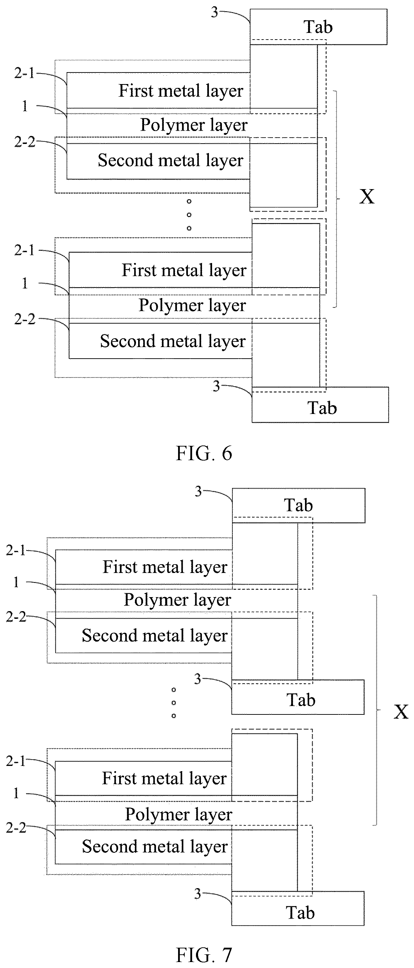

FIG 6 is a schematic structural diagram of a current collector according to yet another embodiment of the present invention. As shown in FIG 6, the current collector provided by this embodiment includes X units, where X≥2 and each unit includes one polymer layer 1 and two metal layers. The metal layers are respectively a first metal layer 2-1 disposed on the upper surface of the polymer layer 1 and a second metal layer 2-2 disposed on the lower surface of the polymer layer 1, where each of the surfaces, which are away from the polymer layer 1, of a first metal layer 2-1 in a first unit and a second metal layer 2-2 in an X-th unit includes a tab connection region and a non-tab connection region, while each of the surfaces, which are away from the polymer layer 1, of a second metal layer 2-2 in a first unit and a first metal layer 2-1 in an X-th unit includes a metal layer connection region and a non-metal layer connection region, and Z=2.

FIG 7 is a schematic structural diagram of a current collector according to yet another embodiment of the present invention. As shown in FIG 7, the current collector provided by this embodiment includes X units, where X≥2 and each unit includes one polymer layer 1 and two metal layers. The metal layers are respectively a first metal layer 2-1 disposed on the upper surface of the polymer layer 1 and a second metal layer 2-2 disposed on the lower surface of the polymer layer 1, where each of the surfaces, which are away from the polymer layer 1, of a first metal layer 2-1 and a second metal layer 2-2 in a first unit and a second metal layer 2-2 in an X-th unit, includes a tab connection region and a non-tab connection region, while the surface of a first metal layer 2-1 in an X-th unit, which is away from the polymer layer 1, includes a metal layer connection region and a non-metal layer connection region, and Z=1.

In yet another specific embodiment, the current collector includes X units, where X≥2, and the first metal layer or the second metal layer in Z units, or each of the first metal layer and the second metal layer in Z units includes the tab connection region and the non-tab connection region. One of the first metal layer and second metal layer in at least one unit of the Z units includes the tab connection region and the non-tab connection region, and the other of the first metal layer and second metal layer includes the metal layer connection region and the non-metal layer connection region. Meantime, the first metal layer and/or the second metal layer in at least one unit in the remaining X-Z units each include the metal layer connection region and the non-metal layer connection region, where the thickness of the metal layer connection region is greater than that of the non-metal layer connecting region and Z≥1.

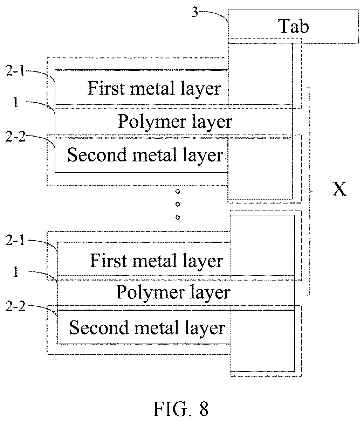

FIG 8 is a schematic structural diagram of a current collector according to yet another embodiment of the present invention. As shown in FIG 8, the current collector provided by this embodiment includes X units, where X≥2 and each unit includes one polymer layer 1 and two metal layers. The metal layers are respectively a first metal layer 2-1 disposed on the upper surface of the polymer layer 1 and a second metal layer 2-2 disposed on the lower surface of the polymer layer 1, where the upper surface of the first metal layer 2-1 in a first unit includes a tab connection region and a non-tab connection region; and the surface, which is away from the polymer layer 1, of the second metal layer 2-2 in the first unit includes a metal layer connection region and a non-metal layer connection region. Meantime, each of the surfaces, which are away from the polymer layer 1, of the first metal layer 2-1 and/or the second metal layer 2-2 in at least one unit of the second unit to the X-th unit also includes a metal layer connection region and a non-metal layer connection region. FIG 8 only shows the metal layer connection regions and the non-metal layer connection regions of the first metal layer 2-1 and the second metal layer 2-2 in the X-th unit. That is, Z=1.

Through further research, the applicant finds that the thickness difference between the portion of the metal layer corresponding to the tab connection region and the portion of the metal layer corresponding to the non-tab connection region also has a certain influence on the performance of the current collector, and specifically, the thickness of the portion of the metal layer corresponding to the tab connection region is 1.05-10 times to that of the portion of the metal layer corresponding to the non-tab connection region.

Further, the thickness of the portion of the metal layer corresponding to the tab connection region is 1.5-3 times to that of the portion of the metal layer corresponding to the non-tab connection region.

Similarly to the influence of the thickness difference between the tab connection region and the non-tab connection region, the thickness difference between the metal layer connection region and the non-metal layer connection region also has a certain influence on the performance of the current collector. Specifically, the thickness of the portion of the metal layer corresponding to the metal layer connection region is 1.05-10 times to that of the portion of the metal layer corresponding to the non-metal layer connection region.

By adopting the current collector structure provided by the present invention, the welding strength of the tab and the current collector is effectively improved, and specifically, the welding strength of the tab is more than or equal to 0.4 N/mm.

To sum up, the present invention provides a current collector, which effectively improves the welding strength of the tab by performing a thickening treatment on the tab connection region for connecting the tab in the metal layer, thereby improving the binding force between the tab and the current collector, reducing the contact impedance of the tab connection region, and improving the connection qualified rate between the tab and the metal layer.

A second aspect of the present invention provides a lithium-ion battery, which includes any of the above current collectors.

On the basis of the current collector provided by the present application, those skilled in the art can prepare a positive sheet according to the prior art and then a lithium-ion battery by combination with a negative sheet, a separator, electrolyte, a tab, and the like. The lithium-ion battery provided by the present invention effectively reduces the impedance of the lithium ion battery and improves the connection qualified rate of the lithium ion batteries by using the current collector of the present invention.

The implementation of the present invention has at least the following advantages:
1. The present invention provides a current collector, which effectively improves the welding strength of the tab by performing a thickening treatment on the tab connection region for connecting the tab on the metal layer, thereby improving the binding force between the tab and the current collector, reducing the contact impedance of the tab connection region, and improving the connection qualified rate between the tab and the metal layer.
2. When the current collector includes multiple units, the welding strength between the units may be effectively improved by thickening the metal layer connection region which is located in the metal layer and used for the connection between the units, thereby reducing the contact resistance between the current collector units and improving the connection qualified rate between the current collector units.
3. The lithium-ion battery provided by the present invention effectively uses the current collector provided by the present invention, which reduces the ohmic impedance of the lithium ion battery and improves the connection qualified rate of lithium ion batteries.

### BRIEF DESCRIPTION OF DRAWINGS

FIG 1 is a schematic structural diagram of a current collector according to an embodiment of the present invention.
FIG 2 is a schematic structural diagram of a current collector according to another embodiment of the present invention.
FIG 3 is a schematic structural diagram of a current collector according to yet another embodiment of the present invention.
FIG 4 is a schematic structural diagram of a current collector according to yet another embodiment of the present invention.
FIG 5 is a schematic structural diagram of a current collector according to yet another embodiment of the present invention.
FIG 6 is a schematic structural diagram of a current collector according to yet another embodiment of the present invention.
FIG 7 is a schematic structural diagram of a current collector according to yet another embodiment of the present invention.
FIG 8 is a schematic structural diagram of a current collector according to yet another embodiment of the present invention.

### Description of the drawings:

1-polymer layer; 2-metal layer; 2-1-first metal layer; 2-2-second metal layer; 3-tab.

### DESCRIPTION OF EMBODIMENTS

Positive tabs used in the following Examples and Comparative Examples were purchased from Lianyungang Delixin Electronic Technology Co., Ltd., and the positive tabs are made of aluminum; the negative tabs were purchased from Lianyungang Delixin Electronic Technology Co., Ltd., and the negative tabs are made of one of nickel, metal nickel coated with copper on its surface, and stainless steel.

UM-20 ultrasonic-wave metal welder from Shenzhen STGN Electronic Technology Co., Ltd. was used for ultrasonic welding, where welding parameters were as follows: welding power of 3000 W, welding frequency of 20 kHz, welding vibration amplitude of 40 µm, welding time of 0.42 s and welding pressure of 0. 3 MPa.

Type ZXL-200W laser welder from Dongguan Zhengxin Laser Science and Technology Co., Ltd. is used for laser welding, where welding parameters were as follows: laser wavelength of 1064 nm, laser power of 200 W, pulse frequency of 150 Hz, and pulse width of 10 ms.

### Reference Example 1

The structure of current collector provided by this Example is shown in FIG 1, where, a polymer layer was PET layer, a metal layer was aluminum layer, the thickness of the polymer PET layer was 6 µm, the thickness of a portion of the metal layer corresponding to a non-tab connection region was 1 µm, and the thickness of a portion of the metal layer corresponding to a tab connection region was 1.05 µm. A positive tab was welded to the tab connection region of the metal aluminum layer by ultrasonic welding. The positive tab had a thickness of 0.1 mm and a width of 6 mm.

The tab was clamped with a clamp by using LK-108A Tensile Tester from Likong Instrument Technology Co., Ltd., and then a tensile force value N for pulling the tab off the current collector was tested by using the Tensile Tester. The width of the tab was represented as D, and then the tab welding strength F may be calculated according to the equation F=N/D. Results showed that the tab welding strength in this Example was 0.6 N/mm.

### Reference Example 2

The structure of current collector provided by this Example is shown in FIG 1, where, a polymer layer was PET layer, a metal layer was aluminum layer, the thickness of the polymer PET layer was 6 µm, the thickness of a portion of the metal layer corresponding to a non-tab connection region was 1 µm, and the thickness of a portion of the metal layer corresponding to a tab connection region was 1.5 µm. A positive tab was welded to the tab connection region of the metal aluminum layer by ultrasonic welding. The positive tab had a thickness of 0.1 mm and a width of 6 mm.

With the same welding strength test method as that in Example 1, results showed that the tab welding strength in this Example was 1.1 N/mm.

### Reference Example 3

The structure of current collector provided by this Example was shown in FIG 1, where, a polymer layer was PET layer, a metal layer was aluminum layer, the thickness of the polymer PET layer was 6 µm, the thickness of a portion of the metal layer corresponding to a non-tab connection region was 1 µm, and the thickness of a portion of the metal layer corresponding to a tab connection region was 2 µm. A positive tab was welded to the tab connection region of the metal aluminum layer by ultrasonic welding. The positive tab had a thickness of 0.1 mm and a width of 6 mm.

With the same welding strength test method as that in Example 1, results showed that the tab welding strength in this Example was 1.6 N/mm.

### Reference Example 4

The structure of current collector provided by this Example was shown in FIG 1, where, a polymer layer was PET layer, a metal layer was aluminum layer, the thickness of the polymer PET layer was 6 µm, the thickness of a portion of the metal layer corresponding to a non-tab connection region was 1 µm, and the thickness of a portion of the metal layer corresponding to a tab connection region was 3 µm. A positive tab was welded to the tab connection region of the metal aluminum layer by ultrasonic welding. The positive tab had a thickness of 0.1 mm and a width of 6 mm.

With the same welding strength test method as that in Example 1, results showed that the tab welding strength in this Example was 2.2 N/mm.

### Reference Example 5

The structure of current collector provided by this Example was shown in FIG 1, where, a polymer layer was PET layer, a metal layer was aluminum layer, the thickness of the polymer PET layer was 6 µm, the thickness of a portion of the metal layer corresponding to a non-tab connection region was 1 µm, and the thickness of a portion of the metal layer corresponding to a tab connection region was 5 µm. A positive tab was welded to the tab connection region of the metal aluminum layer by ultrasonic welding. The positive tab had a thickness of 0.1 mm and a width of 6 mm.

With the same welding strength test method as that in Example 1, results showed that the tab welding strength in this Example was 1.9 N/mm.

### Reference Example 6

The structure of current collector provided by this Example was shown in FIG 1, where, a polymer layer was PET layer, a metal layer was copper layer, the thickness of the polymer PET layer was 6 µm, the thickness of a portion of the metal layer corresponding to a non-tab connection region was 1 µm, and the thickness of a portion of the metal layer corresponding to a tab connection region was 1.05 µm. A negative tab was welded to the tab connection region of the metal copper layer by ultrasonic welding. The negative tab was made of nickel, and had a thickness of 0.1 mm and a width of 6 mm.

With the same welding strength test method as that in Example 1, results showed that the tab welding strength in this Example was 0.4 N/mm.

### Reference Example 7

The structure of current collector provided by this Example was shown in FIG 1, where, a polymer layer was PET layer, a metal layer was copper layer, the thickness of the polymer PET layer was 6 µm, the thickness of a portion of the metal layer corresponding to a non-tab connection region was 1 µm, and the thickness of a portion of the metal layer corresponding to a tab connection region was 1.5 µm. A negative tab was welded to the tab connection region of the metal copper layer by ultrasonic welding. The negative tab was made of nickel, and had a thickness of 0.1 mm and a width of 6 mm.

With the same welding strength test method as that in Example 1, results showed that the tab welding strength in this Example was 0.9 N/mm.

### Reference Example 8

The structure of current collector provided by this Example was shown in FIG 1, where, a polymer layer was PET layer, a metal layer was copper layer, the thickness of the polymer PET layer was 6 µm, the thickness of a portion of the metal layer corresponding to a non-tab connection region was 1 µm, and the thickness of a portion of the metal layer corresponding to a tab connection region was 2 µm. A negative tab was welded to the tab connection region of the metal copper layer by ultrasonic welding. The negative tab was made of nickel, and had a thickness of 0.1 mm and a width of 6 mm.

With the same welding strength test method as that in Example 1, results showed that the tab welding strength in this Example was 1.5 N/mm.

### Reference Example 9

The structure of current collector provided by this Example was shown in FIG 1, where, a polymer layer was PET layer, a metal layer was copper layer, the thickness of the polymer PET layer was 6 µm, the thickness of a portion of the metal layer corresponding to a non-tab connection region was 1 µm, and the thickness of a portion of the metal layer corresponding to a tab connection region was 3 µm. A negative tab was welded to the tab connection region of the metal copper layer by ultrasonic welding. The negative tab was made of nickel, and had a thickness of 0.1 mm and a width of 6 mm.

With the same welding strength test method as that in Example 1, results showed that the tab welding strength in this Example was 2.1 N/mm.

### Reference Example 10

The structure of current collector provided by this Example was shown in FIG 1, where, a polymer layer was PET layer, a metal layer was copper layer, the thickness of the polymer PET layer was 6 µm, the thickness of a portion of the metal layer corresponding to a non-tab connection region was 1 µm, and the thickness of a portion of the metal layer corresponding to a tab connection region was 5 µm. A negative tab was welded to the tab connection region of the metal copper layer by ultrasonic welding. The negative tab was made of nickel, and had a thickness of 0.1 mm and a width of 6 mm.

With the same welding strength test method as that in Example 1, results showed that the tab welding strength in this Example was 1.8 N/mm.

### Reference Example 11

The structure of current collector provided by this Example was shown in FIG 1, where, a polymer layer was PP layer, a metal layer was aluminum layer, the thickness of the polymer PP layer was 4 µm, the thickness of a portion of the metal layer corresponding to a non-tab connection region was 0.5 µm, and the thickness of a portion of the metal layer corresponding to a tab connection region was 5 µm. A positive tab was welded to the tab connection region of the metal aluminum layer by ultrasonic welding. The positive tab had a thickness of 0.1 mm and a width of 6 mm.

With the same welding strength test method as that in Example 1, results showed that the tab welding strength in this Example was 1.9 N/mm.

### Reference Example 12

The structure of current collector provided by this Example was shown in FIG 1, where, a polymer layer was PET layer, a metal layer was copper layer, the thickness of the polymer PET layer was 5 µm, the thickness of a portion of the metal layer corresponding to a non-tab connection region was 0.5 µm, and the thickness of a portion of the metal layer corresponding to a tab connection region was 5 µm. A negative tab was welded to the tab connection region of the metal copper layer by ultrasonic welding. The negative tab was made of nickel, and had a thickness of 0.1 mm and a width of 6 mm.

With the same welding strength test method as that in Example 1, results showed that the tab welding strength in this Example was 1.7 N/mm.

### Reference Example 13

The structure of current collector provided by this Example was shown in FIG 1, where, a polymer layer was PET layer, a metal layer was aluminum layer, the thickness of the polymer PET layer was 1 µm, the thickness of a portion of the metal layer corresponding to a non-tab connection region was 2 µm, and the thickness of a portion of the metal layer corresponding to a tab connection region was 3 µm. A positive tab was welded to the tab connection region of the metal aluminum layer by ultrasonic welding. The positive tab had a thickness of 0.1 mm and a width of 6 mm.

With the same welding strength test method as that in Example 1, results showed that the tab welding strength in this Example was 2.3 N/mm.

### Reference Example 14

The structure of current collector provided by this Example was shown in FIG 1, where, a polymer layer was PP layer, a metal layer was copper layer, the thickness of the polymer PP layer was 1 µm, the thickness of a portion of the metal layer corresponding to a non-tab connection region was 2 µm, and the thickness of a portion of the metal layer corresponding to a tab connection region was 2.5 µm. A negative tab was welded to the tab connection region of the metal copper layer by ultrasonic welding. The negative tab was made of nickel coated with copper on its surface, and had a thickness of 0.1 mm and a width of 6 mm.

With the same welding strength test method as that in Example 1, results showed that the tab welding strength in this Example was 2 N/mm.

### Reference Example 15

The structure of current collector provided by this Example was shown in FIG 2, where, a polymer layer was PP layer, a metal layer was aluminum layer, the thickness of the polymer PP layer was 22 µm, the thickness of a portion of the metal layer corresponding to a non-tab connection region was 1.1 µm, and the thickness of a portion of the metal layer corresponding to a tab connection region was 2 µm. A positive tab was welded to the tab connection region of the metal aluminum layer by ultrasonic welding. The positive tab had a thickness of 0.8 mm and a width of 8 mm.

With the same welding strength test method as that in Example 1, results showed that the tab welding strength in this Example was 1.9 N/mm.

### Reference Example 16

The structure of current collector provided by this Example was shown in FIG 2, where, a polymer layer was PP layer, a metal layer was copper layer, the thickness of the polymer PP layer was 25 µm, the thickness of a portion of the metal layer corresponding to a non-tab connection region was 0.9 µm, and the thickness of a portion of the metal layer corresponding to a tab connection region was 1.6 µm. A negative tab was welded to the tab connection region of the metal copper layer by ultrasonic welding. The negative tab was made of nickel, and had a thickness of 0.08 mm and a width of 6 mm.

With the same welding strength test method as that in Example 1, results showed that the tab welding strength in this Example was 1.7 N/mm.

### Reference Example 17

The structure of current collector provided by this Example was shown in FIG 3, where, a polymer layer was PP layer, a metal layer was aluminum layer, the thickness of the polymer PP layer was 8 µm, the thickness of a portion of the metal layer corresponding to a non-tab connection region was 0.7 µm, and the thickness of a portion of the metal layer corresponding to a tab connection region was 1.2 µm. A positive tab was welded to the tab connection region of the metal aluminum layer by ultrasonic welding. The positive tab had a thickness of 0.05 mm and a width of 8 mm.

With the same welding strength test method as that in Example 1, results showed that the tab welding strength in this Example was 1.5 N/mm.

### Reference Example 18

The structure of current collector provided by this Example was shown in FIG 3, where, a polymer layer was PP layer, a metal layer was copper layer, the thickness of the polymer PP layer was 8 µm, the thickness of a portion of the metal layer corresponding to a non-tab connection region was 0.7 µm, and the thickness of a portion of the metal layer corresponding to a tab connection region was 1.2 µm. A negative tab was welded to the tab connection region of the metal copper layer by ultrasonic welding. The negative tab was made of nickel coated with copper on its surface, and had a thickness of 0.05 mm and a width of 8 mm.

With the same welding strength test method as that in Example 1, results showed that the tab welding strength in this Example was 1.5 N/mm.

### Example 19

The structure of current collector provided by this Example was shown in FIG 6, where X=9, and a polymer layer was PET layer, a metal layer was aluminum layer, the thickness of the polymer PET layer was 9 µm, the thickness of a portion of the metal layer corresponding to a non-tab connection region and a non-metal layer connection region was 1 µm, and the thickness of portions of the metal layer respectively corresponding to a tab connection region and a metal layer connection region (where, the metal layer connection region was disposed in a portion of each metal layer that did not need to connect with the tab, that is, all of the metal layers omitted in FIG 6 include the metal layer connection region and the non-metal layer connection region, and the metal layer connection regions in the following Examples were the same) was each 1.5 µm. A positive tab was welded to the tab connection region of the metal aluminum layer by ultrasonic welding. The positive tab had a thickness of 0.2 mm and a width of 12 mm.

With the same welding strength test method as that in Example 1, results showed that the tab welding strength in this Example was 2.6 N/mm.

### Example 20

The structure of current collector provided by this Example was shown in FIG 6, where X=10, and a polymer layer was PET layer, a metal layer was stainless steel layer, the thickness of the polymer PET layer was 9 µm, the thickness of a portion of the metal layer corresponding to a non-tab connection region and a non-metal layer connection region was 1 µm, and the thickness of portions of the metal layer respectively corresponding to a tab connection region and a metal layer connection region was each 1.5 µm. A negative tab was welded to the tab connection region of the metal stainless steel layer by laser welding, and was made of stainless steel. The negative tab had a thickness of 0.2 mm and a width of 12 mm.

With the same welding strength test method as that in Example 1, results showed that the tab welding strength in this Example was 2.4 N/mm.

### Example 21

The structure of current collector provided by this Example was shown in FIG 7, where X=9, and a polymer layer was PP layer, a metal layer was aluminum layer, the thickness of the polymer PP layer was 8 µm, the thickness of a portion of the metal layer corresponding to a non-tab connection region and a non-metal layer connection region was 1 µm, and the thickness of portions of the metal layer respectively corresponding to a tab connection region and a metal layer connection region was each 2 µm. A positive tab was welded to the tab connection region of the metal aluminum layer by laser welding. The positive tab had a thickness of 0.03 mm and a width of 15 mm.

With the same welding strength test method as that in Example 1, results showed that the tab welding strength in this Example was 2.9 N/mm.

### Example 22

The structure of current collector provided by this Example was shown in FIG 7, where X=10, and a polymer layer was PP layer, a metal layer was nickel layer, the thickness of the polymer PP layer was 8 µm, the thickness of a portion of the metal layer corresponding to a non-tab connection region and a non-metal layer connection region was 0.8 µm, and the thickness of portions of the metal layer respectively corresponding to a tab connection region and a metal layer connection region was each 2 µm. A negative tab was welded to the tab connection region of the metal nickel layer by laser welding, and was made of nickel. The negative tab had a thickness of 0.03 mm and a width of 15 mm.

With the same welding strength test method as that in Example 1, results showed that the tab welding strength in this Example was 2.7 N/mm.

### Example 23

The structure of current collector provided by this Example was shown in FIG 8, where X=9, and a polymer layer was PP layer, a metal layer was aluminum layer, the thickness of the polymer PP layer was 8 µm, the thickness of a portion of the metal layer corresponding to a non-tab connection region and a non-metal layer connection region was 0.6 µm, and the thickness of portions of the metal layer respectively corresponding to a tab connection region and a metal layer connection region was each 1 µm. A positive tab was welded to the tab connection region of the metal aluminum layer by ultrasonic welding. The positive tab had a thickness of 1 mm and a width of 10 mm.

With the same welding strength test method as that in Example 1, results showed that the tab welding strength in this Example was 2 N/mm.

### Example 24

The structure of current collector provided by this Example was shown in FIG 8, where X=10, and a polymer layer was PP layer, a metal layer was nickel layer, the thickness of the polymer PP layer was 8 µm, the thickness of a portion of the metal layer corresponding to a non-tab connection region and a non-metal layer connection region was 0.6 µm, and the thickness of portions of the metal layer respectively corresponding to a tab connection region and a metal layer connection region was each 2 µm. A negative tab was welded to the tab connection region of the metal nickel layer by ultrasonic welding, and was made of nickel. The negative tab had a thickness of 1 mm and a width of 10 mm.

With the same welding strength test method as that in Example 1, results showed that the tab welding strength in this Example was 1.9 N/mm.

### Comparative Example 1

The current collector provided by the Comparative Example included a polymer layer and a metal layer, and the metal layer was disposed on the upper surface of the polymer layer. The polymer layer was a PET layer, the metal layer was an aluminum layer, the thickness of the polymer PET layer was 6 µm, and the thickness of the metal layer was 1 µm. A positive tab was welded to the metal aluminum layer by ultrasonic welding. The positive tab had a thickness of 0.1 mm and a width of 6 mm.

With the same welding strength test method as that in Example 1, results showed that the tab welding strength in this Comparative Example was 0.2 N/mm.

### Comparative Example 2

The current collector provided by the Comparative Example included a polymer layer and a metal layer, and the metal layer was disposed on the upper surface of the polymer layer. The polymer layer was a PET layer, the metal layer was a copper layer, the thickness of the polymer PET layer was 6 µm, and the thickness of the metal layer was 1 µm. A negative tab was welded to the metal copper layer by ultrasonic welding, and was made of nickel. The negative tab had a thickness of 0.1 mm and a width of 6 mm.

With the same welding strength test method as that in Example 1, results showed that the tab welding strength in this Comparative Example was 0.1 N/mm.

### Comparative Example 3

The current collector provided by the Comparative Example included a polymer layer and metal layers, and the metal layers were respectively disposed on the upper surface and lower surface of the polymer layer. The polymer layer was a PP layer, the metal layers were aluminum layers, the thickness of the polymer PP layer was 22 µm, and the thickness of each metal layer was 1.1 µm. A positive tab was welded to the metal aluminum layer that was located on the upper surface of the polymer layer by ultrasonic welding. The positive tab had a thickness of 0.08 mm and a width of 8 mm.

With the same welding strength test method as that in Example 1, results showed that the tab welding strength in this Comparative Example was 0.3 N/mm.

### Comparative Example 4

The current collector provided by the Comparative Example included a polymer layer and metal layers, and the metal layers were respectively disposed on the upper surface and lower surface of the polymer layer. The polymer layer was a PP layer, the metal layers were copper layers, the thickness of the polymer PP layer was 25 µm, and the thickness of each metal layer was 0.9 µm. A negative tab was welded to the metal copper layer that was located on the upper surface of the polymer layer by ultrasonic welding, and was made of nickel. The negative tab had a thickness of 0.08 mm and a width of 6 mm.

With the same welding strength test method as that in Example 1, results showed that the tab welding strength in this Comparative Example was 0.2 N/mm.

### Comparative Example 5

The current collector provided by the Comparative Example included a polymer layer and metal layers, and the metal layers were respectively disposed on the upper surface and lower surface of the polymer layer. The polymer layer was a PP layer, the metal layers were aluminum layers, the thickness of the polymer PP layer was 8 µm, and the thickness of each metal layer was 0.7 µm. A positive tab was welded to each of metal aluminum layers that were respectively located on the upper surface and lower surface of the polymer layer by ultrasonic welding. The positive tab had a thickness of 0.05 mm and a width of 8 mm.

With the same welding strength test method as that in Example 1, results showed that the tab welding strength in this Comparative Example was 0.2 N/mm.

### Comparative Example 6

The current collector provided by the Comparative Example included a polymer layer and metal layers, and the metal layers were respectively disposed on the upper surface and lower surface of the polymer layer. The polymer layer was a PP layer, the metal layers were copper layers, the thickness of the polymer PP layer was 8 µm, and the thickness of each metal layer was 0.7 µm. A negative tab was welded to each of metal copper layers that were respectively located on the upper surface and lower surface of the polymer layer by ultrasonic welding; and was made of metal nickel coated with copper on its surface. The negative tab had a thickness of 0.05 mm and a width of 8 mm.

With the same welding strength test method as that in Example 1, results showed that the tab welding strength in this Comparative Example was 0.2 N/mm.

### Comparative Example 7

The current collector provided by the Comparative Example included 9 units, each unit included a polymer layer and metal layers, and the metal layers were respectively disposed on the upper surface and the lower surface of the polymer layer. The polymer layer was a PP layer, the metal layers were aluminum layers, the thickness of the polymer PP layer was 8 µm, and the thickness of each metal layer was 0.6 µm. A positive tab was welded to the metal aluminum layer that was located on the upper surface of the polymer layer in first unit by ultrasonic welding. The positive tab had a thickness of 1 mm and a width of 10 mm.

With the same welding strength test method as that in Example 1, results showed that the tab welding strength in this Comparative Example was 0.2 N/mm.

### Comparative Example 8

The current collector provided by the Comparative Example included 10 units, each unit included a polymer layer and metal layers, and the metal layers were respectively disposed on the upper surface and the lower surface of the polymer layer. The polymer layer was a PP layer, the metal layers were nickel layers, the thickness of the polymer PP layer was 8 µm, and the thickness of each metal layer was 0.6 µm. A negative tab was welded to the metal nickel layer that was located on the upper surface of the polymer layer in first unit by ultrasonic welding; and was made of nickel. The negative tab had a thickness of 1 mm and a width of 10 mm.

With the same welding strength test method as that in Example 1, results showed that the tab welding strength in this Comparative Example was 0.1 N/mm.

### Comparative Example 9

The current collector provided by the Comparative Example included 9 units, each unit included a polymer layer and metal layers, and the metal layers were respectively disposed on the upper surface and the lower surface of the polymer layer. The polymer layer was a PET layer, the metal layers were aluminum layers, the thickness of the polymer PET layer was 9 µm, and the thickness of each metal layer was 1 µm. A positive tab was welded to each of the metal aluminum layers that were respectively located on the upper surface of the polymer layer in first unit and the lower surface of the polymer layer in ninth unit by ultrasonic welding. The positive tab had a thickness of 0.2 mm and a width of 12 mm.

With the same welding strength test method as that in Example 1, results showed that the tab welding strength in this Comparative Example was 0.3 N/mm.

### Comparative Example 10

The current collector provided by the Comparative Example included 10 units, each unit included a polymer layer and metal layers, and the metal layers were respectively disposed on the upper surface and the lower surface of the polymer layer. The polymer layer was a PET layer, the metal layers were stainless steel layers, the thickness of the polymer PET layer was 9 µm, and the thickness of each metal layer was 1 µm. A negative tab was welded to each of the metal stainless steel layers that were respectively located on the upper surface of the polymer layer in first unit and the lower surface of the polymer layer in tenth unit by laser welding. The negative tab was made of stainless steel and had a thickness of 0.2 mm and a width of 12 mm.

With the same welding strength test method as that in Example 1, results showed that the tab welding strength in this Comparative Example was 0.3 N/mm.

### Comparative Example 11

The current collector provided by the Comparative Example included 9 units, each unit included a polymer layer and metal layers, and the metal layers were respectively disposed on the upper surface and the lower surface of the polymer layer. The polymer layer was a PP layer, the metal layers were aluminum layers, the thickness of the polymer PP layer was 8 µm, and the thickness of each metal layer was 0.8 µm. A positive tab was welded to each of the metal aluminum layers that were respectively located on the upper surface and lower surface of the polymer layer in first unit and the lower surface of the polymer layer in ninth unit by laser welding. The positive tab had a thickness of 0.03 mm and a width of 15 mm.

With the same welding strength test method as that in Example 1, results showed that the tab welding strength in this Comparative Example was 0.3 N/mm.

### Comparative Example 12

The current collector provided by the Comparative Example included 10 units, each unit included a polymer layer and metal layers, and the metal layers were respectively disposed on the upper surface and the lower surface of the polymer layer. The polymer layer was a PP layer, the metal layers were nickel layers, the thickness of the polymer PP layer was 8 µm, and the thickness of each metal layer was 0.8 µm. A negative tab was welded to each of the metal nickel layers that were respectively located on the upper surface and the lower surface of the polymer layer in first unit and the lower surface of the polymer layer in tenth unit by laser welding. The negative tab was made of nickel and had a thickness of 0.03 mm and a width of 15 mm.

With the same welding strength test method as that in Example 1, results showed that the tab welding strength in this Comparative Example was 0.2 N/mm.

According to the invention, the lithium-ion battery is prepared on the basis of the current collectors provided by the above Examples and Comparative Examples. In the following Examples and Comparative Examples, lithium-cobaltate positive electrode material with a specific capacity of 181 mAh/g was purchased from Beijing Dangsheng Material Science and Technology Co., Ltd.; and graphite negative electrode material with a specific capacity of 359 mAh/g was purchased from Shanghai Shanshan Science and Technology Co., Ltd..

Polyethylene (PE) porous separator with a thickness of 12 µm was a wet-process separator ND12 prepared by Shanghai Enjie New Material Technology Co., Ltd.; and electrolyte was LBC445B33 electrolyte from Shenzhen Xinzhoubang Science and Technology Co., Ltd..

### Reference Example 25

95 parts by mass of lithium-cobaltate positive electrode material, 2 parts by mass of acetylene black conductive agent, 0.5 parts by mass of carbon nanotube conductive agent, 2.5 parts by mass of PVDF binder, and 60 parts by mass of solvent NMP were stirred in a dual planet mixer under a condition of 30 r/min for revolution and 1,500 r/min for rotation in vacuum for 4 h and dispersed to form a uniform slurry, then the slurry was coated on the current collector provided by Reference Example 1 and baked at 120°C to dry, rolled under 40 tons of rolling pressure and cut into a positive electrode sheet. The areal density of the positive electrode sheet was 20 mg/cm², and the compaction density of the positive electrode sheet was 4.16 g/cm³.

95 parts by mass of graphite negative electrode material, 1.5 parts by mass of acetylene black conductive agent, 0.5 parts by mass of carbon nanotube conductive agent, 2.0 parts by mass of styrene-butadiene rubber (SBR) binder, 1.0 part by mass of carboxymethyl cellulose (CMC), and 100 parts by mass of solvent water were stirred in a dual planet mixer under a condition of 30 r/min for revolution and 1,500 r/min for rotation in vacuum for 4 h and dispersed to form a uniform slurry, then the slurry was coated on the current collector provided by Example 6 and baked at 110°C to dry, rolled under 40 tons of rolling pressure and cut into a negative electrode sheet. The areal density of the negative electrode sheet was 10 mg/cm², and the compaction density of the negative electrode sheet was 1.74 g/cm³.

The above positive electrode sheet and the negative electrode sheet were combined with polyethylene (PE) porous separator and electrolyte to prepare the lithium-ion battery C1 through a conventional preparation process.

### Reference Example 26

The current collector provided in Reference Example 2 was used as a positive electrode, the current collector provided in Reference Example 7 was used as a negative electrode, and the lithium-ion battery C2 was prepared using the same preparation method as that used in Reference Example 25.

### Reference Example 27

The current collector provided in Example 3 was used as a positive electrode, the current collector provided in Example 8 was used as a negative electrode, and the lithium-ion battery C3 was prepared using the same preparation method as that used in Example 25.

### Reference Example 28

The current collector provided in Reference Example 4 was used as a positive electrode, the current collector provided in Reference Example 9 was used as a negative electrode, and the lithium-ion battery C4 was prepared using the same preparation method as that used in Reference Example 25.

### Reference Example 29

The current collector provided in Reference Example 5 was used as a positive electrode, the current collector provided in Reference Example 10 was used as a negative electrode, and the lithium-ion battery C5 was prepared using the same preparation method as that used in Reference Example 25.

### Reference Example 30

The current collector provided in Reference Example 11 was used as a positive electrode, the current collector provided in Reference Example 12 was used as a negative electrode, and the lithium-ion battery C6 was prepared using the same preparation method as that used in Reference Example 25.

### Reference Example 31

The current collector provided in Reference Example 13 was used as a positive electrode, the current collector provided in Reference Example 14 was used as a negative electrode, and the lithium-ion battery C7 was prepared using the same preparation method as that used in Reference Example 25.

### Reference Example 32

The current collector provided in Reference Example 15 was used as a positive electrode, the current collector provided in Reference Example 16 was used as a negative electrode, and the lithium-ion battery C8 was prepared using the same preparation method as that used in Reference Example 25.

### Reference Example 33

The current collector provided in Reference Example 17 was used as a positive electrode, the current collector provided in Reference Example 18 was used as a negative electrode, and the lithium-ion battery C9 was prepared using the same preparation method as that used in Reference Example 25.

### Example 34

The current collector provided in Example 19 was used as a positive electrode, the current collector provided in Example 20 was used as a negative electrode, and the lithium-ion battery C10 was prepared using the same preparation method as that used in Reference Example 25.

### Example 35

The current collector provided in Example 21 was used as a positive electrode, the current collector provided in Example 22 was used as a negative electrode, and the lithium-ion battery C11 was prepared using the same preparation method as that used in Reference Example 25.

### Example 36

The current collector provided in Example 23 was used as a positive electrode, the current collector provided in Example 24 was used as a negative electrode, and the lithium-ion battery C12 was prepared using the same preparation method as that used in Reference Example 25.

### Comparative Example 13

The current collector provided in Comparative Example 1 was used as a positive electrode, the current collector provided in Comparative Example 2 was used as a negative electrode, and the lithium-ion battery A1 was prepared using the same preparation method as that used in Reference Example 25.

### Comparative Example 14

The current collector provided in Comparative Example 3 was used as a positive electrode, the current collector provided in Comparative Example 4 was used as a negative electrode, and the lithium-ion battery A2 was prepared using the same preparation method as that used in Reference Example 25.

### Comparative Example 15

The current collector provided in Comparative Example 5 was used as a positive electrode, the current collector provided in Comparative Example 6 was used as a negative electrode, and the lithium-ion battery A3 was prepared using the same preparation method as that used in Reference Example 25.

### Comparative Example 16

The current collector provided in Comparative Example 7 was used as a positive electrode, the current collector provided in Comparative Example 8 was used as a negative electrode, and the lithium-ion battery A4 was prepared using the same preparation method as that used in Reference Example 25.

### Comparative Example 17

The current collector provided in Comparative Example 9 was used as a positive electrode, the current collector provided in Comparative Example 10 was used as a negative electrode, and the lithium-ion battery A5 was prepared using the same preparation method as that used in Reference Example 25.

### Comparative Example 18

The current collector provided in Comparative Example 11 was used as a positive electrode, the current collector provided in Comparative Example 12 was used as a negative electrode, and the lithium-ion battery A6 was prepared using the same preparation method as that used in Reference Example 25.

In the present invention, the lithium-ion batteries C1-C12 prepared in Examples 25-36 and the lithium-ion batteries A1-A6 prepared in Comparative Examples 13-18 were tested for their ohmic impedance and connection qualified rate, and the results were shown in Table 1.

The method for testing ohmic impedance includes: testing the ohmic impedance of the battery through an internal resistance tester (RBM-200 intelligent battery internal resistance tester of Shenzhen Chaosisi Technology Co., Ltd.), with the AC signal frequency set to be 1 KHz.

The method for testing the connection qualified rate of the battery includes the following steps of: preparing 100 identical lithium-ion batteries, and carrying out visual inspection and welding strength test on a welding point of each lithium-ion battery, where the visual inspection requires that metal layers between two units are connected together and the metal layer is connected with an external tab. At the same time, it is required that the welding strength of each metal layer that is tested through a Tensile Tester is not less than 80% of a normal welding strength value. If there is one metal layer which fails to meet the requirements through visual inspection and welding strength test, the lithium-ion battery is considered as a defective product. The number of non-defective battery is counted. The qualified rate = the number of the non-defective battery/100 * 100%.

**Table 1 Performance Test Results of Lithium-ion Batteries C1-C12 and A1-A6**

| | Ohmic impedance (mΩ) | Connection qualified rate of batteries |
|---|---|---|
| C1 | 128 | 98% |
| C2 | 123 | 99% |
| C3 | 120 | 99% |
| C4 | 117 | 99% |
| C5 | 124 | 98% |
| C6 | 133 | 97% |
| C7 | 116 | 99% |
| C8 | 127 | 99% |
| C9 | 131 | 99% |
| C10 | 109 | 98% |
| C11 | 118 | 98% |
| C12 | 138 | 98% |
| A1 | 221 | 68% |
| A2 | 205 | 72% |
| A3 | 219 | 70% |
| A4 | 224 | 69% |
| A5 | 207 | 75% |
| A6 | 214 | 73% |

## Claims

1. A current collector, **characterized in that** the current collector comprises M metal layers and N polymer layers, wherein the M metal layers and the N polymer layers are stacked, each of L metal layers comprises a tab connection region and a non-tab connection region, a thickness of the tab connection region is greater than that of the non-tab connection region, M≥2, N≥2, L≥1 and M≥L;
the current collector comprises X units, wherein X≥2 and each unit comprises the polymer layer, a first metal layer disposed on an upper surface of the polymer layer, and a second metal layer disposed on a lower surface of the polymer layer, and the first metal layer and/or the second metal layer in the at least one unit each comprise the tab connection region and the non-tab connection region;
a certain metal layer comprises a metal layer connection region and a non-metal layer connection region, the metal layer connection region is configured for connecting with a metal layer in another unit, and a thickness of the metal layer connection region is greater than that of the non-metal layer connection region.

2. The current collector according to claim 1, **characterized in that** the first metal layer and/or the second metal layer in Z units comprise the tab connection region and the non-tab connection region, and the first metal layer and/or the second metal layer in at least one unit of remaining (X-Z) units comprise the metal layer connection region and the non-metal layer connection region, Z≥1.

3. The current collector according to claim 1 or claim 2, **characterized in that** one of the first metal layer and the second metal layer in at least one unit of Z units comprises the tab connection region and the non-tab connection region, and the other of the first metal layer and the second metal layer comprises the metal layer connection region and the non-metal layer connection region, Z≥1.

4. The current collector according to any one of claims 1-3, **characterized in that** a thickness of a portion of the metal layer corresponding to the tab connection region is 1.05-10 times to that of a portion of the metal layer corresponding to the non-tab connection region.

5. The current collector according to any one of claims 1-3, **characterized in that** a thickness of a portion of the metal layer corresponding to the tab connection region is 1.5-3 times to that of a portion of the metal layer corresponding to the non-tab connection region.

6. The current collector according to claim 2 or claim 3, **characterized in that** a thickness of a portion of the metal layer corresponding to the metal layer connection region is 1.05-10 times to that of a portion of the metal layer corresponding to the non-metal layer connection region.

7. The current collector according to any one of claims 1-6, **characterized in that** a welding strength of a tab is equal to or greater than 0.4 N/mm.

8. A lithium ion battery, **characterized by** comprising the current collector according to any one of claims 1-7.

## Patentansprüche

1. Stromabnehmer, **dadurch gekennzeichnet, dass** der Stromabnehmer M Metallschichten und N Polymerschichten umfasst, wobei die M Metallschichten und N Polymerschichten gestapelt sind, jede der L Metallschichten einen Flachverbindungsbereich und einen Nicht-Flachverbindungsbereich umfasst, eine Dicke des Flachverbindungsbereichs größer ist als die des Nicht-Flachverbindungsbereichs, M≥2, N≥2, L≥1 und M≥L;
wobei der Stromabnehmer X Einheiten umfasst, wobei X≥2 und jede Einheit die Polymerschicht, eine erste Metallschicht, die an einer oberen Oberfläche der Polymerschicht angeordnet ist, und eine zweite Metallschicht, die an einer unteren Oberfläche der Polymerschicht angeordnet ist, umfasst, und die erste Metallschicht und/oder die zweite Metallschicht in der mindestens einen Einheit jeweils den Flachverbindungsbereich und den Nicht-Flachverbindungsbereich umfassen;
wobei eine bestimmte Metallschicht einen Metallschichtverbindungsbereich und einen Nicht-Metallschichtverbindungsbereich umfasst, der Metallschichtverbindungsbereich konfiguriert ist zum Verbinden mit einer Metallschicht in einer anderen Einheit und eine Dicke des Metallschichtverbindungsbereichs größer ist als die des Nicht-Metallschichtverbindungsbereichs.

2. Stromabnehmer nach Anspruch 1, **dadurch gekennzeichnet, dass** die erste Metallschicht und/oder die zweite Metallschicht in Z Einheiten den Flachverbindungsbereich und den Nicht-Flachverbindungsbereich umfassen und die erste Metallschicht und/oder die zweite Metallschicht in mindestens einer Einheit von verbleibenden (X-Z) Einheiten den Metallschichtverbindungsbereich und den Nicht-Metallschichtverbindungsbereich umfassen und Z≥1.

3. Stromabnehmer nach Anspruch 1 oder Anspruch 2, **dadurch gekennzeichnet, dass** eine der ersten Metallschicht und der zweiten Metallschicht in mindestens einer Einheit von Z Einheiten den Flachverbindungsbereich und den Nicht-Flachverbindungsbereich umfasst und die andere der ersten Metallschicht und der zweiten Metallschicht den Metallschichtverbindungsbereich und den Nicht-Metallschichtverbindungsbereich umfasst und Z≥1.

4. Stromabnehmer nach einem der Ansprüche 1-3, **dadurch gekennzeichnet, dass** eine Dicke eines Abschnitts der Metallschicht, der dem Flachverbindungsbereich entspricht, 1,05-10-mal die eines Abschnitts der Metallschicht ist, der dem Nicht-Flachverbindungsbereich entspricht.

5. Stromabnehmer nach einem der Ansprüche 1-3, **dadurch gekennzeichnet, dass** eine Dicke eines Abschnitts der Metallschicht, der dem Flachverbindungsbereich entspricht, 1,5-3-mal die eines Abschnitts der Metallschicht ist, der dem Nicht-Flachverbindungsbereich entspricht.

6. Stromabnehmer nach Anspruch 2 oder Anspruch 3, **dadurch gekennzeichnet, dass** eine Dicke eines Abschnitts der Metallschicht, der dem Metallschichtverbindungsbereich entspricht, 1,05-10-mal die eines Abschnitts der Metallschicht ist, der dem Nicht-Flachverbindungsbereich entspricht.

7. Stromabnehmer nach einem der Ansprüche 1-6, **dadurch gekennzeichnet, dass** eine Schweißfestigkeit einer Flachverbindung gleich groß oder größer als 0,4 N/mm ist.

8. Lithium-Ionen-Batterie, **dadurch gekennzeichnet, dass** sie den Stromabnehmer nach einem der Ansprüche 1-7 umfasst.

## Revendications

1. Collecteur de courant, **caractérisé en ce que** le collecteur de courant comprend M couches de métal et N couches de polymère, dans lequel les M couches de métal et les N couches de polymère sont empilées, chacune des L couches de métal comprend une zone de connexion de languette et une zone non destinée à connecter une languette, une épaisseur de la zone de connexion de languette est supérieure à celle de la zone non destinée à connecter une languette, M≥2, N≥2, L≥1 et M≥L ;
le collecteur de courant comprend X unités, dans lequel X≥2 et chaque unité comprend la couche de polymère, une première couche de métal disposée sur une surface supérieure de la couche de polymère et une seconde couche de métal disposée sur une surface inférieure de la couche de polymère, et la première couche de métal et/ou la seconde couche de métal dans ladite au moins une unité comprend chacune la zone de connexion de languette et la zone non destinée à connecter une languette ;
une certaine couche de métal comprend une zone de connexion de couche de métal et une zone non destinée à la connexion d'une couche de métal, la zone de connexion de couche de métal est configurée pour être connectée à une couche de métal d'une autre unité, et une épaisseur de la zone de connexion de couche de métal est supérieure à celle de la zone non destinée à la connexion d'une couche de métal.

2. Collecteur de courant selon la revendication 1, **caractérisé en ce que** la première couche de métal et/ou la seconde couche de métal dans Z unités comprennent la zone de connexion de languette et la zone non destinée à connecter une languette, et la première couche de métal et/ou la seconde couche de métal dans au moins une unité des (X-Z) unités restantes comprennent la zone de connexion de couche de métal et la zone non destinée à la connexion d'une couche de métal, Z≥1.

3. Collecteur de courant selon la revendication 1 ou la revendication 2, **caractérisé en ce que** l'une parmi la première couche de métal et la seconde couche de métal dans au moins une unité des Z unités comprend la zone de connexion de languette et la zone non destinée à connecter une languette, et l'autre parmi la première couche de métal et la seconde couche de métal comprend la zone de connexion de couche de métal et la zone non destinée à la connexion d'une couche de métal, Z≥1.

4. Collecteur de courant selon l'une quelconque des revendications 1 à 3, **caractérisé en ce qu'**une épaisseur d'une partie de la couche de métal correspondant à la zone de connexion de languette fait 1,05 à 10 fois celle d'une partie de la couche de métal correspondant à la zone non destinée à connecter une languette.

5. Collecteur de courant selon l'une quelconque des revendications 1 à 3, **caractérisé en ce qu'**une épaisseur d'une partie de la couche de métal correspondant à la zone de connexion de languette fait 1,5 à 3 fois celle d'une partie de la couche de métal correspondant à la zone non destinée à connecter une languette.

6. Collecteur de courant selon la revendication 2 ou revendication 3, **caractérisé en ce qu'**une épaisseur d'une partie de la couche de métal correspondant à la zone de connexion de couche de métal fait 1,05 à 10 fois celle d'une partie de la couche de métal correspondant à la zone non destinée à la connexion d'une couche de métal.

7. Collecteur de courant selon l'une quelconque des revendications 1 à 6, **caractérisé en ce qu'**une force de soudage d'une languette est supérieure ou égale à 0,4 N/mm.

8. Batterie au lithium-ion, **caractérisée en ce qu'**elle comprend le collecteur de courant selon l'une quelconque des revendications 1 à 7.
